(19) **Europäisches Patentamt**
**European Patent Office**
**Office européen des brevets**

(11) **EP 4 093 539 B1**

(12) **EUROPÄISCHE PATENTSCHRIFT**

(45) Veröffentlichungstag und Bekanntmachung des Hinweises auf die Patenterteilung:
**04.10.2023 Patentblatt 2023/40**

(51) Internationale Patentklassifikation (IPC):
***B01J 27/26*** (2006.01)

(21) Anmeldenummer: **21700692.3**

(22) Anmeldetag: **11.01.2021**

(52) Gemeinsame Patentklassifikation (CPC):
**B01J 27/26; B01J 31/0205; B01J 31/069; B01J 31/2208; C08G 65/2663;** B01J 31/0202; B01J 2531/26; B01J 2531/845

(86) Internationale Anmeldenummer:
**PCT/EP2021/050404**

(87) Internationale Veröffentlichungsnummer:
**WO 2021/148272 (29.07.2021 Gazette 2021/30)**

(54) **VERFAHREN ZUR HERSTELLUNG VON DOPPELMETALLCYANID-KATALYSATOREN**

METHOD FOR THE PRODUCTION OF DOUBLE METAL CYANIDE CATALYSTS

PROCÉDÉ DE FABRICATION DE CATALYSEURS AU CYANURE MÉTALLIQUE DOUBLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.01.2020 EP 20152862**

(43) Veröffentlichungstag der Anmeldung:
**30.11.2022 Patentblatt 2022/48**

(73) Patentinhaber: **Covestro Deutschland AG**
**51373 Leverkusen (DE)**

(72) Erfinder:
• **HOFMANN, Joerg**
**47800 Krefeld (DE)**

• **LORENZ, Klaus**
**41539 Dormagen (DE)**
• **VOGELSANG, Elisabeth**
**50733 Köln (DE)**
• **GLEIXNER, Maria**
**47906 Kempen (DE)**

(74) Vertreter: **Levpat**
**c/o Covestro AG**
**Gebäude K12**
**51365 Leverkusen (DE)**

(56) Entgegenhaltungen:
WO-A1-01/39883   US-A- 3 941 849
US-A- 5 099 075   US-A- 6 063 897

**Beschreibung**

Die vorliegende Erfindung betrifft ein Verfahren zur Herstellung eines Doppelmetallcyanid-Katalysators (DMC) umfassend die Umsetzung einer wässrigen Lösung eines cyanidfreien Metallsalzes, einer wässrigen Lösung eines Metallcyanidsalzes, eines organischen Komplexliganden, optional einer komplexbildenden Komponente unter Bildung einer Dispersion, wobei die Herstellung der Dispersion in Gegenwart einer Mischdüse und eines Peroxids erfolgt. Ein weiterer Gegenstand der Erfindung umfasst Doppelmetallcyanid-Katalysatoren (DMC) erhältlich nach dem erfindungsgemäßen Verfahren sowie die Verwendung der DMC-Katalysatoren zur Herstellung von Polyoxyalkylenpolyolen. Ein weiterer Gegenstand sind DMC-Katalysatoren, welche erhältlich über dieses Verfahren sind sowie die Verwendung der erfindungsgemäßen Katalysatoren zur Herstellung von Polyoxyalkylenpolyolen.

DMC-Katalysatoren sind im Prinzip aus dem Stand der Technik bekannt (siehe z.B. US-A 3 404 109, US-A 3 829 505, US-A 3 941 849 und US-A 5 158 922). DMC-Katalysatoren, die z.B. in US-A 5 470 813, EP-A 700 949, EP-A 743 093, EP-A 761 708, WO 97/40086, WO 98/16310 und WO 00/47649 beschrieben sind, besitzen eine sehr hohe Aktivität in der Homopolymerisation von Epoxiden und ermöglichen die Herstellung von Polyetherpolyolen bei sehr geringen Katalysatorkonzentrationen (25 ppm oder weniger), so dass eine Abtrennung des Katalysators aus dem fertigen Produkt i.a. nicht mehr erforderlich ist. Ein typisches Beispiel sind die in EP-A 700 949 beschriebenen hochaktiven DMC-Katalysatoren, die neben einer Doppelmetallcyanid-Verbindung (z.B. Zinkhexacyanocobaltat(III)) und einem organischen Komplexliganden (z.B. tert.-Butanol) noch einen Polyether mit einem zahlenmittlerem Molekulargewicht größer als 500 g/mol enthalten.

In WO 01/39883 A1 wird ein Verfahren zur Herstellung von Doppelmetall¬cyanid(DMC)-Katalysatoren für die Herstellung von Polyetherpolyolen durch Poly¬addition von Alkylenoxiden an aktive Wasserstoffatome aufweisende Starterverbin¬dungen offenbart, bei dem die Herstellung der DMC-Katalysatordispersion unter Einsatz einer Mischdüse, bevorzugt eines Strahldispergators erfolgt. Die so hergestellten DMC-Katalysatoren besitzen bei der Polyetherpolyol-Herstellung erhöhte Aktivität, reduzierte Teilchengröße und engere Teilchengrößenverteilung.

In WO 01/80994 A1 wird ebenfalls ein Verfahren zur Herstellung von Doppelmetallcyanid - Katalysatoren (DMC) offenbart, bei dem zunächst wässrige Lösungen eines Metallsalzes und eines Metall¬cyanid¬salzes in Gegenwart eines organischen Komplexliganden und ggf. einer oder mehrerer weiterer komplexbildender Komponenten unter Bildung einer DMC-Katalysatordispersion umgesetzt werden, diese Dispersion dann filtriert, der Filter-kuchen anschließend mit einer oder mehreren, wässrigen oder nichtwässrigen Lösungen des organischen Komplexliganden und ggf. einer oder mehreren weiteren komplex-bildenden Komponenten durch Filterkuchenwäsche gewaschen wird und der gewaschene Filterkuchen abschließend nach einem optionalen Auspressen bzw. mechanischen Entfeuchten getrocknet wird. Das offenbarte Verfahren verkürzt die Zeit für die Katalysatorherstellung, wobei die resultierenden Katalysatoren vergleichbare Aktivitäten in der Herstellung von Polyetherpolyolen im Vergleich zu Referenzkatalysatoren besitzen.

EP 700 949 A2 beschreibt einen DMC-Katalysator, enthaltend DMC-Verbindung, einen organischen Komplexliganden und 5 - 80 Gew.-% eines Polyethers mit einem zahlenmittleren Molekulargewicht > 500 g/mol, wobei die Herstellung der DMC-Katalysatordispersion bei Raumtemperatur erfolgt. Die verwendeten Katalysatoren besitzen grundsätzlich eine Aktivität in der Herstellung von Polyetherpolyolen.

Aufgabe der vorliegenden Anmeldung war es, ein verbessertes Verfahren zur Herstellung von Doppelmetallcyanid-Katalysatoren (DMC) mit weiter erhöhter katalytischer Aktivität in der Herstellung von Polyoxyalkylenpolyolen, bevorzugt Polyetherpolyolen und/oder Polyethercarbonatpolyolen, bereitzustellen, wobei diese verbesserte Aktivität beispielsweise bei der Katalysatortestung gemäß des "8K Diol Stressed Tests", der z.B. in WO 98/16310 A1 beschrieben wird, zu einer reduzierten Produktviskosität führt. Ziel war es somit katalytisch aktivere DMC Katalysatoren bereitzustellen, welche zu Polyoxyalkylenpolyolen, bevorzugt Polyetherpolyolen und/oder Polyethercarbonatpolyolen, mit einer reduzierten Viskosität führen, was die weitere Verarbeitbarkeit der Polyoxyalkylenpolyole in der nachfolgenden Polyurethanisierungsreaktion erleichtert. Die erhöhte Katalysatoraktivität ermöglicht außerdem die Reduktion der eingesetzten Katalysatormenge, was die technische Effizienz des Prozesses verbessert.

Daneben war ebenfalls Aufgabe der vorliegenden Erfindung den Anteil an hochmolekularen Nebenprodukten ("High Molecular Weight Tail" (HMWT)) im Polyoxyalkylenpolyol zu reduzieren, da höhere HMWT zu Problemen wie Schaumstörungen oder gar Schaumkollaps in der nachfolgenden Verarbeitung zu Polyurethanweichschäumen führen können.

Überraschenderweise wurde nun gefunden, dass ein Verfahren zur Herstellung eines Doppelmetallcyanid-Katalysators (DMC) umfassend

i) Umsetzung einer wässrigen Lösung eines cyanidfreien Metallsalzes, einer wässrigen Lösung eines Metallcyanidsalzes, eines organischen Komplexliganden, optional einer komplexbildenden Komponente unter Bildung einer Dispersion,
(ii) die Abtrennung des Feststoffs aus der aus (i) erhaltenen Dispersion,
(iii) die Waschung des isolierten Feststoffs mittels Redispergieren oder Filterkuchenwäsche,

(iv) die Trocknung des erhaltenen Feststoffs,

wobei die Umsetzung in Schritt i) unter Einsatz einer Mischdüse erfolgt, wobei der organische Komplexligand eine oder mehrere Verbindung(en) ist und ausgewählt wird aus der Gruppe bestehend aus Dimethoxyethan, tert.-Butanol, 2-Methyl-3-buten-2-ol, 2-Methyl-3-butin-2-ol, Ethylenglykol-mono-tert.-butylether und 3-Methyl-3-oxetan-methanol, wobei Doppelmetallcyanid-Verbindungen der Formel (I) in dem DMC-Kataly¬sator enthalten sind

$$M_x[M'_{x'}(CN)_y]_z \qquad (I),$$

wobei M ausgewählt ist aus einem oder mehreren Metallkationen der Gruppe bestehend aus Zn(II), Fe(II), Ni(II), Mn(II), Co(II), Sr(II), Sn(II), Pb(II) und Cu(II), bevorzugt Zn(II), Fe(II), Co(II) und Ni(II) und M' ausgewählt ist aus einem oder mehreren Metallkationen der Gruppe bestehend aus Fe(II), Fe(III), Co(II), Co(III), Cr(II), Cr(III), Mn(II), Mn(III), Ir(III), Ni(II), Rh(III), Ru(II), V(IV) und V(V) bevorzugt Co(III), Fe(III), Cr(III) und Ir(III), und x, x', y und z sind ganzzahlig und so gewählt, dass die Elektronenneutralität der Doppelmetallcyanidverbindung gegeben ist bevorzugt $x = 3$, $x' = 1$, $y = 6$ und $z = 2$ und wobei die Umsetzung in Schritt i) in Gegenwart eines Peroxids erfolgt, die oben genannte Aufgabe löst.

Zur Herstellung der Doppelmetallcyanid-Verbindungen geeignete cyanidfreie Metallsalze besitzen bevorzugt die allgemeine Formel (II),

$$M(X)_n \qquad (II)$$

wobei

M ausgewählt ist aus den Metallkationen Zn(II), Fe(II), Ni(II), Mn(II), Co(II), Sr(II), Sn(II), Pb(II) und Cu(II), bevorzugt ist M Zn(II), Fe(II), Co(II) oder Ni(II),
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
n ist 1, wenn X = Sulfat, Carbonat oder Oxalat ist und
n ist 2, wenn X = Halogenid, Hydroxid, Cyanat, Thiocyanat, Isocyanat, Isothiocyanat oder Nitrat ist,
oder geeignete cyanidfreie Metallsalze besitzen die allgemeine Formel (III),

$$M_r(X)_3 \qquad (III)$$

wobei
M ausgewählt ist aus den Metallkationen Fe(III), Al(III) und Cr(III),
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
r ist 2, wenn X = Sulfat, Carbonat oder Oxalat ist und
r ist 1, wenn X = Halogenid, Hydroxid, Cyanat, Thiocyanat, Isocyanat, Isothiocyanat, Carboxylat oder Nitrat ist,
oder geeignete cyanidfreie Metallsalze besitzen die allgemeine Formel (IV),

$$M(X)_s \qquad (IV)$$

wobei
M ausgewählt ist aus den Metallkationen Mo(IV), V(IV) und W(IV)
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
s ist 2, wenn X = Sulfat, Carbonat oder Oxalat ist und
s ist 4, wenn X = Halogenid, Hydroxid, Cyanat, Thiocyanat, Isocyanat, Isothiocyanat, Carboxylat oder Nitrat ist,
oder geeignete cyanidfreie Metallsalze besitzen die allgemeine Formel (V),

$$M(X)_t \qquad (V)$$

wobei
M ausgewählt ist aus den Metallkationen Mo(VI) und W(VI)
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;

t ist 3, wenn X = Sulfat, Carbonat oder Oxalat ist und

t ist 6, wenn X = Halogenid, Hydroxid, Cyanat, Thiocyanat, Isocyanat, Isothiocyanat, Carboxylat oder Nitrat ist,

In einer bevorzugten Ausführungsform des erfindungsgemäßen Verfahrens ist das cyanidfreie Metallsalz der wässrigen Lösung eines cyanidfreien Metallsalzes eine oder mehrere Verbindung(en) und wird ausgewählt aus der Gruppe bestehend aus Zinkchlorid, Zinkbromid, Zinkjodid, Zinkacetat, Zink¬acetylaceto¬nat, Zinkbenzoat, Zinknitrat, Eisen(II)sulfat, Eisen(II)¬bromid, Eisen¬(II)¬chlorid, Cobalt(II)chlorid, Cobalt(II)thio¬cyanat, Nickel(II)chlorid und Nickel¬(II)nitrat.

Zur Herstellung der Doppelmetallcyanid-Verbindungen geeignete Metallcyanidsalze besitzen bevorzugt die allgemeine Formel (VI)

$$(Y)_a\,M'(CN)_b\,(A)_c \qquad\qquad (VI)$$

wobei

M' ausgewählt ist aus einem oder mehreren Metallkationen der Gruppe bestehend aus Fe(II), Fe(III), Co(II), Co(III), Cr(II), Cr(III), Mn(II), Mn(III), Ir(III), Ni(II), Rh(III), Ru(II), V(IV) und V(V), bevorzugt ist M' ein oder mehrere Metallkationen der Gruppe bestehend aus Co(II), Co(III), Fe(II), Fe(III), Cr(III), Ir(III) und Ni(II),

Y ausgewählt ist aus einem oder mehreren Metallkationen der Gruppe bestehend aus Alkalimetall (d.h. Li+, Na$^+$, K$^+$, Rb$^+$, Cs$^+$) und Erdalkalimetall (d.h. Be$^{2+}$, Ca$^{2+}$, Mg$^{2+}$, Sr$^{2+}$, Ba$^{2+}$),

A ausgewählt ist aus einem oder mehreren Anionen der Gruppe bestehend aus Halogeniden (d.h. Fluorid, Chlorid, Bromid, Iodid), Hydroxid, Sulfat, Carbonat, Cyanat, Thiocyanat, Isocyanat, Isothiocyanat, Carboxylat, Oxalat oder Nitrat und

a, b und c sind ganzzahlige Zahlen, wobei die Werte für a, b und c so gewählt sind, dass die Elektroneutralität des Metallcyanidsalzes gegeben ist; a ist vorzugsweise 1, 2, 3 oder 4; b ist vorzugsweise 4, 5 oder 6; c besitzt bevorzugt den Wert 0.

In einer bevorzugten Ausführungsform des erfindungsgemäßen Verfahrens ist das Metallcyanidsalz der wässrigen Lösung eines Metallcyanidsalzes eine oder mehrere Verbindung(en) und wird ausgewählt aus der Gruppe bestehend aus Kaliumhexacyanocobaltat(III), Kaliumhexacyanoferrat(II), Kaliumhexacyanoferrat(III), Calciumhexacyanocobaltat(III) und Lithiumhexacyanocobaltat(III).

In einer bevorzugten Ausführungsform des erfindungsgemäßen Verfahrens ist die Doppelmetallcyanid-Verbindung eine oder mehrere Verbindung(en) und wird ausgewählt aus der Gruppe bestehend aus Zinkhexacyano¬cobaltat(III), Zink¬hexacyanoiridat(III), Zinkhexacyanoferrat(III) und Cobalt(II)hexa¬cyanocobaltat(III). Besonders bevorzugt verwendet wird Zinkhexacyanocobaltat(III).

Im erfindungsgemäßen Verfahren ist der organische Komplexligand eine oder mehrere Verbindung(en) und wird ausgewählt aus der Gruppe bestehend aus Dimethoxyethan, tert.-Butanol, 2-Methyl-3-buten-2-ol, 2-Methyl-3-butin-2-ol, Ethylenglykol-mono-tert.-butylether und 3-Methyl-3-oxetan-methanol, bevorzugt tert.-Butanol.

In einer Ausführungsform des erfindungsgemäßen Verfahrens wird eine komplexbildende Komponente verwendet.

Die erfindungsgemäße, komplexbildende Komponente kann aus den Verbindungsklassen der Polyether, Polyester, Polycarbonate, Polyalkylenglykolsorbitanester, Polyalkylenglykolglycidylether, Polyacrylamid, Poly(acrylamid-co-acrylsäure), Polyacrylsäure, Poly(acrylsäure-co-maleinsäure), Polyacrylnitril, Polyalkylacrylate, Polyalkylmethacrylate, Polyvinylmethylether, Polyvinylethylether, Polyvinylacetat, Polyvinylalkohol, Poly-N-vinylpyrrolidon, Poly(N-vinylpyrrolidon-co-acrylsäure), Polyvinylmethylketon, Poly(4-vinylphenol), Poly(acrylsäure-co-styrol), Oxazolinpolymere, Polyalkylenimine, Maleinsäure- und Maleinsäureanhydridcopolymere, Hydroxyethylcellulose und Polyacetale, oder der Glycidylether, Glycoside, Carbonsäureester mehrwertiger Alkohole, Ester oder Amide, Cyclodextrine und/oder Phosphorverbindungen ausgewählt werden.

Bei dem erfindungsgemäßen Verfahren zur Herstellung der DMC-Katalysatoren werden als komplexbildende Komponente bevorzugt Polyether eingesetzt.

In einer bevorzugten Ausführungsform weist der Polyether ein zahlenmittleres Molekulargewicht von ≥ 500 g/mol auf, wobei das zahlenmittlere Molekulargewicht aus der ermittelten OH-Zahl berechnet wird.

Die Bestimmung der OH-Zahlen erfolgt gemäß der Vorschrift der DIN 53240.

Geeignete Polyether beinhalten solche, die mittels Ringöffnungspolymerisation von cyclischen Ethern hergestellt werden, wobei diese cyclischen Ether beispielsweise auch Oxetan-Polymere und auch Tetrahydrofuran-Polymere umfassen. Jegliche Katalyse ist hierfür möglich. Der Polyether weist hierbei geeignete Endgruppe auf, wie beispielsweise Hydroxyl-, Amin, Ester oder Ether-Endgruppen.

In einer besonders bevorzugten Ausführungsform weist der Polyether eine durchschnittliche Hydroxylfunktionalität von 2 bis 8 und ein zahlenmittleres Molekulargewicht im Bereich von 500 g/mol bis 10.000 g/mol, bevorzugt von 700 g/mol bis 5.000 g/mol auf, wobei das zahlenmittlere Molekulargewicht aus der ermittelten OH-Zahl berechnet wird.

In einer besonders bevorzugten Ausführungsform sind die Polyether Polyetherpolyole, wobei die Polyetherpolyole durch Umsetzung von Alkylenoxiden und H-funktionellen Starterverbindungen in Gegenwart von sauren, basischen und/oder metallorganischen Katalysatoren erhalten werden. Diese metallorganischen Katalysatoren sind beispielsweise Doppelmetallcyanid - Katalysatoren (DMC).

Geeignete Polyetherpolyole sind Poly(oxypropylen)polyole, Poly(oxypropylenoxyethylen)polyole, Polytetramethyletherglykole sowie Blockcopolymere enthaltend Poly(oxy)ethylen, Poly(oxy)propylen und/oder Poly(oxy)butylen Blöcke wie beispielsweise Poly(oxy)ethylen-Poly(oxy)propylen-Blockcopolymere mit terminalen Poly(oxy)ethylen Blöcken.

In einer bevorzugten Ausführungsform ist das Polyetherpolyol ein Poly(oxypropylen)polyol mit einem zahlenmittleren Molekulargewicht von $\geq$ 500 g/mol, wobei das zahlenmittlere Molekulargewicht aus der ermittelten OH-Zahl berechnet wird.

In einer besonders bevorzugten Ausführungsform ist das Polyetherpolyol ein Poly(oxypropylen)polyol, bevorzugt ein Poly(oxypropylen)diol und/oder ein Poly(oxypropylen)triol mit einem zahlenmittleren Molekulargewicht von 700 g/mol bis 4000 g/mol, wobei das zahlenmittlere Molekulargewicht aus der ermittelten OH-Zahl berechnet wird.

In einer alternativen Ausführungsform haben die Polyether eine durchschnittliche Hydroxylfunktionalität von 2 bis 8 und ein zahlenmittleres Molekulargewicht im Bereich von 150 g/mol bis kleiner 500 g/mol, bevorzugt von 200 g/mol bis 400 g/mol, wobei das zahlenmittlere Molekulargewicht aus der ermittelten OH-Zahl berechnet wird.

In einer bevorzugten alternativen Ausführungsform sind die alternativen Polyether Polyetherpolyole, wobei diese alternativen Polyetherpolyole eine durchschnittliche Hydroxylfunktionalität von 2 bis 8 und ein zahlenmittleres Molekulargewicht im Bereich von 150 g/mol bis kleiner 500 g/mol, bevorzugt eine durchschnittliche Hydroxylfunktionalität von 2 bis 8 und ein zahlenmittleres Molekulargewicht im Bereich von 200 g/mol bis 400 g/mol aufweisen wobei das zahlenmittlere Molekulargewicht aus der ermittelten OH-Zahl berechnet wird. Diese alternativen Polyetherpolyole werden ebenfalls durch Umsetzung von Alkylenoxiden und H-funktionellen Starterverbindungen in Gegenwart von sauren, basischen und/oder metallorganischen Katalysatoren erhalten. Diese metallorganischen Katalysatoren sind beispielsweise Doppelmetallcyanid - Katalysatoren (DMC).

Geeignete alternative Polyetherpolyole sind Poly(oxypropylen)polyole, Poly(oxypropylenoxyethylen)polyole, Polytetramethyletherglykole sowie Blockcopolymere enthaltend Poly(oxy)ethylen, Poly(oxy)propylen und/oder Poly(oxy)butylen Blöcke wie beispielsweise Poly(oxy)ethylen-Poly(oxy)propylen-Blockcopolymere mit terminalen Poly(oxy)ethylen Blöcken. Weiterhin sind auch Tripropylenglykol, Triethylenglykol, Tetrapropylenglykol, Tetraethylenglykol, Dipropylenglykolmonomethylether, Tripropylenglykolmonomethylether, sowie Monoalkyl- und Dialkylether von Glykolen und Poly(alkylenglykol)en geeignet.

In einer besonders bevorzugten alternativen Ausführungsform ist das alternative Polyetherpolyol ein Polypropylenglykol und/oder ein Polyethylenglykol mit einem zahlenmittleren Molekulargewicht im Bereich von 150 g/mol bis kleiner 500 g/mol, wobei das zahlenmittlere Molekulargewicht aus der ermittelten OH-Zahl berechnet wird.

Im erfindungsgemäßen Verfahren werden Peroxide verwendet. Hierunter sind nach der allgemeinen fachlichen Definition Verbindungen zu verstehen, die das Peroxidanion ($O_2^{2-}$) oder eine Peroxygruppe (-O-O-) enthalten, wobei der Sauerstoff in diesen Verbindungen eine formale Oxidationszahl von minus eins hat.

Die Gruppe peroxidischer Verbindungen kann in anorganische und organische Peroxide unterteilt werden, wobei die anorganischen Peroxide oftmals salzartigen Charakter besitzen, die organischen Peroxide hingegen kovalent gebundene Peroxygruppen tragen. Die Sauerstoff-Sauerstoff-Bindung von Peroxiden ist labil und neigt zur homolytischen Spaltung unter Bildung reaktiver Radikale.

In einer Ausführungsform des erfindungsgemäßen Verfahrens ist das Peroxid ein anorganisches Peroxid.

Hierbei ist das anorganische Peroxid in einer bevorzugten Ausführungsform des erfindungsgemäßen Verfahrens eine oder mehrere Verbindungen und wird ausgewählt aus der Gruppe bestehend aus Wasserstoffperoxid, Peroxoborate, Peroxocarbonate, Peroxochlorate, Peroxodiphosphate, Peroxodiphosphorsäure, Peroxodischwefelsäure, Peroxodisulfate, Peroxodisulfuryldifluorid, Peroxohyponitrite, Peroxokohlensäure, Peroxonitrate, Peroxomolydate, Peroxomonophosphate, Peroxomonophosphorsäure, Peroxosalpetersäure, Peroxomonoschwefelsäure, Peroxomomosulfate, Peroxowolframate.

In einer alternativen Ausführungsform des erfindungsgemäßen Verfahrens ist das Peroxid ein organisches Peroxid, wobei beispielhaft Perester und Hydroperoxide genannt seien.

In einer bevorzugten Ausführungsform des erfindungsgemäßen Verfahrens ist das organische Peroxid eine oder mehrere Verbindungen und wird ausgewählt aus der Gruppe bestehend aus Dibenzoylperoxid, Dilauroylperoxid, Acetylacetonperoxid, Cyclohexanonperoxid, Methylethylketonperoxid, Methylisobutylketonperoxid, Cumolhydroperoxid, tert-Butylhydroperoxid, Diisopropylbenzolhydroperoxid, Di-(2-tert-butyl-peroxyisopropyl)-benzol, tert-Butylcumylperoxid, Di-tert-amylperoxid, Di-tert-butylperoxid, Dicumylperoxid, 2,5-Dimethyl-2,5-di-(tert-butylperoxy)-hexan, 1,1-Di-(tert-butylperoxy)-3,3,5-trimethylcyclohexan, 1,1-Di-(tert-butylperoxy)-cyclohexan, 1,1-Di-(tert-amylperoxy)cyclohexan 2,5-Dimethyl-2,5-di(2-ethylhexanoylperoxy)-hexan, 2,2-Di-(tert-butylperoxy)butan, tert-Butyl-peroxy-benzoat, tert-Butylperoxy-3,5,5-trimethylhexanoat, tert-Butylperoxy-2-ethylhexanoat, tert-Butylmonoperoxymaleat, Di-(4-tert-butyl-cyclohexyl)-peroxydicarbonat, tert-Butylperoxy-2-ethylhexylcarbonat, tert-Butylperoxyisopropylcarbonat, 1,3 1,4-Bis(tert-butylperoxyisopropyl)benzol, tert-Butyl Cumyl Peroxid, 2,5-Di(tert-butylperoxy)-2,5-dimethylhexan, n-Butyl-4,4'-di(tert-butylperoxy)valerat, Di-(2,4-dichlorobenzoyl)-peroxid, tert-Butylperoxybenzoat, Butyl-4,4-di-(tert-butylperoxy) valerat, 2,5-Dimethyl-2,5-di(tert-butylperoxy)hexin-3, Di-tert-Butylperoxid, tert-Butyl-peroxyacetat, tert-Butylperoxybenzoat, tert-Butyl-peroxyneodecanoat, tert-Butylperoxy-isobutyrat, tert-Amylperoxypivalat, tert-Butylperoxypivalat, Diisopropyl-peroxydicarbonat, Dicyclohexyl-peroxydicarbonat und Dicumylperoxid.

In einer besonders bevorzugten Ausführungsform des erfindungsgemäßen Verfahrens ist das organische Peroxid eine oder mehrere Verbindungen und wird ausgewählt aus der Gruppe bestehend aus tert-Amylperoxypivalat, tert-Butylperoxy-2-ethylhexanoat, tert-Butylperoxypivalat und Dibenzoylperoxid..

In einer Ausführungsform des erfindungsgemäßen Verfahrens wird das Peroxid in einem Gewichtsverhältnis von 2 zu 98 bis 30 zu 70, bevorzugt von 5 zu 95 bis 20 zu 80 bezogen auf den organischen Komplexliganden eingesetzt.

Im erfindungsgemäßen Verfahren erfolgt die Herstellung der DMC-Katalysatordispersion unter Einsatz einer Mischdüse (z.B. einer Glattstrahldüse, Levosdüse, Boschdüse und ähnlichem), bevorzugt eines Strahldispergators, wie dies in der Patent-anmel¬dung WO 01/39883 A1 beschrieben ist.

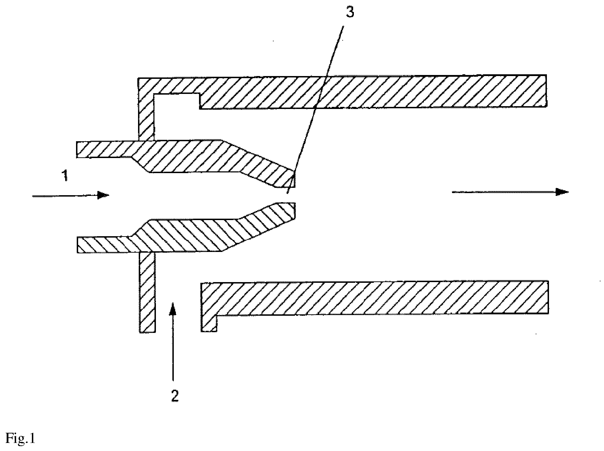

Der prinzipielle Aufbau und die Wirkungsweise geeigneter Mischdüsen soll im folgenden beschrieben werden. Fig. 1 zeigt den schematischen Aufbau einer einfachen Glattstrahldüse. Der Eduktstrom 1 wird zunächst in der Düse 3 beschleunigt und mit hoher Strömungsgeschwindigkeit in den langsam fließenden Eduktstrom 2 verdüst. Dabei wird Eduktstrom 2 beschleunigt und Eduktstrom 1 abgebremst. Ein Teil der kinetischen Energie von Eduktstrahl 1 wird bei diesem Vorgang in Wärme umgewandelt und steht somit für den Vermischungsvorgang nicht mehr zur Verfügung. Die Vermischung der beiden Eduktströme erfolgt anschließend über den turbulenten Zerfall des resultierenden Strahls in Wirbel unterschiedlicher Größe (Wirbelkaskade). Im Vergleich zum Rührkessel können auf diese Weise Konzentrationsunterschiede deutlich schneller abgebaut werden, da deutlich größere und homogenere Leistungsdichten erzielt werden können. Die mittlere Leistungsdichte P berechnet sich dabei nach der folgenden Formel:

$$P = \frac{\Delta p \cdot \dot{V}}{V}$$

mit: $\Delta p$: Druckverlust in der Düse
$\dot{V}$: Volumenstrom
V: Volumen der Düsenbohrung

Der Einsatz solcher Düsen soll im folgenden als Methode 1 bezeichnet werden.

In einer Glattstrahldüse wird ein erster Eduktstrom zunächst in einer Düse beschleu-nigt und mit hoher Strömungsgeschwindigkeit in einen langsam fließenden zweiten Eduktstrom verdüst. Die Vermischung der beiden Eduktströme erfolgt anschließend über den turbulenten Zerfall des resultierenden Strahls in Wirbel unterschiedlicher Größe (Wirbelkaskade). Im Vergleich zum Rührkessel können auf diese Weise Konzentrationsunterschiede deutlich schneller abgebaut werden, da deutlich größere und homogenere Leistungsdichten erzielt werden können.

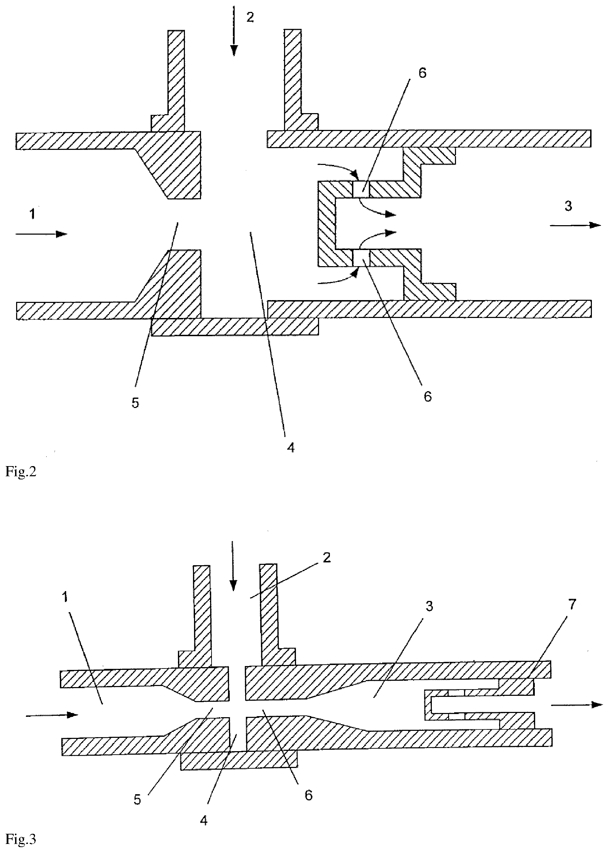

Bevorzugt wird für das erfindungsgemäße Verfahren ein Strahldispergator, wie er in Fig. 2 oder Fig. 3 dargestellt ist, eingesetzt. Der Strahldispergator kann so aufgebaut sein (Fig. 2), dass zwei Düsen 5 und 6 hintereinander angeordnet sind. Der Eduktstrom 1 wird in der Düse 5 durch die Querschnittsverengung zunächst stark beschleunigt. Der beschleunigte Strahl saugt dabei aufgrund der hohen Strö¬mungsgeschwindigkeit die zweite Komponente an. Der Abstand der Düsen wird be¬vorzugt so gewählt werden, dass in der Mischkammer 4 aufgrund der kurzen Ver-weilzeit nur Keimbildung jedoch kein Kristallwachstum erfolgt. Maßgeblich für die optimale Auslegung des Strahldispergators ist somit die Keimbildungs¬geschwindig-keit des Feststoffs. Günstigerweise wird eine Verweilzeit von 0,0001 s bis 0,15 s, vorzugsweise 0,001 s bis 0,1 s eingestellt. Das Kristallwachstum erfolgt erst im Ab-lauf 3. Der Durchmesser der Düsen 6 sollte bevorzugt so gewählt werden, dass dort eine weitere Beschleunigung der teilweise gemischten Edukteströme erfolgt. Aufgrund der dadurch in den Düsen 6 zusätzlich auftretenden Scherkräfte wird im Ver-gleich zur Methode 1 der Zustand der homogenen Vermischung durch einen schnel-leren Wirbelzerfall in kürzerer Zeit erreicht. Dadurch ist es im Gegensatz zu Methode 1 selbst bei Fällungsreaktionen mit sehr hoher Keimbildungs¬geschwindigkeit mög-lich, den Zustand einer idealen Vermischung der Edukte zu erreichen, so dass die Ein¬stellung von definierten stöchiometrischen Zusammen¬setzungen während der Fällungsreaktion möglich ist. Als günstig haben sich Düsendurchmesser von 5000 $\mu$m bis 50 $\mu$m, vorzugsweise 2000 $\mu$m bis 200 $\mu$m erwiesen bei Druckverlusten in der Düse von 0,1 bar bis 1000 bar oder Leistungsdichten im Bereich von $1*10^7$ W/m$^3$ bis $1*10^{13}$ W/m$^3$. Dieser Vermischungs--vorgang soll im folgenden mit Methode 2 bezeichnet werden.

Je nach gewünschter Partikelgröße können noch n Düsen (mit n = 1 - 5) nach¬ge-schaltet werden, so dass man einen mehrstufigen Strahldispergator erhält. In Fig. 3 ist ein solcher mehrstufiger Strahldispergator gezeigt. Im Anschluss an die Düse 6 wird die Dispersion noch einmal durch die Düse 7 geführt. Für die Auslegung der Düsendurchmesser gilt das gleiche wie für Düse 6.

Der zusätzliche Vorteil weiterer Dispergatoren gegenüber der Methode 2 besteht darin, dass durch die großen Scherkräfte in den Düsen bereits gebildete Partikel mechanisch zerkleinert werden können. Auf diese Weise ist es möglich, Partikel mit Durchmessern von 10 $\mu$m bis 0,1 $\mu$m herzustellen. Anstelle mehrerer hintereinander geschalteter Düsen kann die Zerkleinerung aber auch durch Kreislaufführung der Dispersion erreicht werden. Der Einsatz solcher Düsen wird im folgenden mit Methode 3 gekennzeichnet.

Durch die Energiedissipation in den Düsen und durch die Kristallisationsenthalpie kann es zu einer Erwärmung der Dispersion kommen. Da die Temperatur einen wesent¬lichen Einfluss auf den Kristallbildungsprozess haben kann, kann für die isotherme Prozessführung hinter dem Mischorgan ein Wärmeübertrager eingebaut werden.

Ein problemloses Scale-up ist beispielsweise möglich durch den Einsatz einer größeren Zahl von Bohrungen, die Parallelschaltung mehrerer Mischorgane oder die Ver¬größerung der freien Düsenfläche. Letzteres wird jedoch nicht durch eine Er-höhung des Düsendurchmessers erreicht, da auf diese Weise die Möglichkeit des Auftretens eines Kernstroms besteht, wodurch eine Verschlechterung des Misch-ergebnisses resultiert. Bei Düsen mit großen freien Düsenflächen sind deswegen bevor¬zugt Schlitze mit entsprechender Fläche einzusetzen.

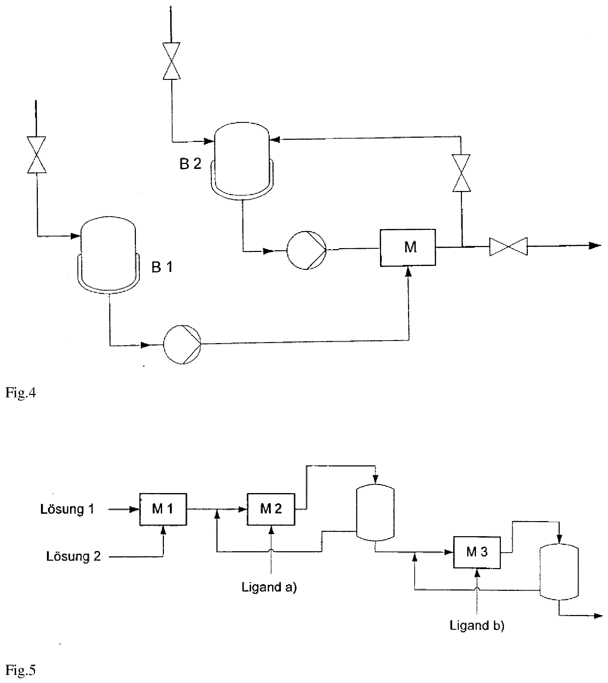

Die Herstellung der DMC-Katalysatordispersion in Schritt i) erfolgt erfindungsgemäß unter Ein-satz einer Misch-düse, bevorzugt eines Strahldispergators. Beispiele geeigneter Appa-raturen sind in Fig. 4 und 5 gezeigt. Fig. 4 zeigt ein semi-batch-Verfahren unter Ein-satz eines Schlaufenreaktors, Fig.5 ein kontinuierliches Verfahren zur Herstellung der DMC-Katalysatordispersion.

Durch die Verwendung einer Mischdüse, speziell eines Strahldispergators kann der Herstellungsprozess der DMC-Katalysatordispersion mit einem vergleichbar einfachen apparativen Aufbau, einem niedrigen Energieaufwand bei der Scherung, einer guten Temperaturkontrolle, sowie einer ebenfalls guten Aufskalierbarkeit gegenüber bekannten technischen Verfahren erfolgen, um eine einfache Implementierung in bestehende DMC-Katalysator-Herstellungsverfahren, beispielsweise in Schlaufenreaktion zu ermöglichen.

In einer Ausführungsform des erfindungsgemäßen Verfahrens umfasst die Herstellung des erfindungsgemäßen Doppelmetallcyanid-Katalysators (DMC)

i) in einem ersten Schritt eine Umsetzung der erfindungsgemäßen, wässrigen Lösung des cyanidfreien Metallsalzes, der erfindungsgemäßen, wässrigen Lösung des Metallcyanidsalzes, dem erfindungsgemäßen, organischen Komplexliganden, optional der erfindungsgemäßen, komplexbildenden Komponente unter Einsatz der erfindungsgemäßen Mischdüse unter Bildung einer Dispersion;
wobei die Umsetzung in Gegenwart eines Peroxids erfolgt;
(ii) in einem zweiten Schritt die Abtrennung des Feststoffs aus der aus (i) erhaltenen Dispersion;
(iii) in einem dritten Schritt die Waschung des isolierten Feststoffs mit einer wässrigen Lösung eines organischen Komplexliganden mittels einer Filterkuchenwäsche;
(iv) in einem vierten Schritt die Trocknung des erhaltenen Feststoffs.

Bevorzugt werden dabei zunächst die wässrigen Lösungen des cyanidfreien Metallsalzes, z.B. Zinkchlorid, eingesetzt im stöchiometrischen Überschuss (mindestens 50 Mol-% bezo¬gen auf das Metallcya¬nidsalz), und des Metallcyanidsalzes, z.B. Kaliumhexa-cyano¬cobaltat, in Gegenwart des organi¬schen Komplexliganden, der z.B. tert.-Buta¬nol sein kann, in Gegenwart des Peroxids umge¬setzt, wobei sich eine Dispersion bildet. Im erfindungsgemäßen Verfahren erfolgt die Herstellung dieser DMC-Katalysatordispersion unter Einsatz einer Misch-düse, bevorzugt eines Strahldispergators.

Die Herstellung der DMC-Katalysatordispersion im Semi-batch Verfahren unter Verwendung eines Strahldispergators in Kombination mit einem Schlaufenreaktor (gemäß Fig. 4) wird im Folgenden erläutert. Hierbei kann entweder die wässrige Lösung eines cyanidfreien Metallsalzes aus dem Behälter B2 im Kreis geführt und die wässrige Metallcyanid-lösung aus Behälter B1 zudosiert werden, oder umgekehrt. Bei der Vereinigung beider Ströme im Mischorgan M kommt es zur Bildung einer Dispersion der DMC-Verbindung. Die Herstellung der Dispersion der DMC-Verbindung kann nach Methode 1, 2 oder 3 erfolgen, bevorzugt nach Methode 2 oder 3. Der Vorteil dieser Methoden besteht in der Möglichkeit, während des gesamten Fällungsvorgangs ein konstantes Eduktverhältnis zu realisieren.

Bevorzugt wird die gebildete Dispersion nach der Fällung noch einige Minuten bis mehrere Stunden im Kreislauf durch den Strahldispergator geführt.

Die Düsendurchmesser liegen dabei bevorzugt zwischen 2000 $\mu$m bis 200 $\mu$m bei Druckverlusten in der Düse zwischen 0,1 bar bis 1000 bar.

Der organische Komplexligand kann dabei in der wässrigen Lösung des cyanidfreien Metallsalzes und/ oder des Metallcyanidsalzes vorhanden sein, oder er wird der nach Ausfällung der Doppelmetallcyanid-Verbindung erhaltenen Dispersion unmittelbar zudosiert (über Behälter B1 oder B2).

Das Peroxid kann dabei in der wässrigen Lösung des cyanidfreien Metallsalzes und/ oder des Metallcyanidsalzes vorhanden sein, oder es wird der nach Ausfällung der Doppelmetallcyanid-Verbindung erhaltenen Dispersion unmittelbar zudosiert (über Behälter B1 oder B2).

In einer bevorzugten Ausführungsform des erfindungsgemäßen Verfahrens sind der organische Komplexligand und das Peroxid in der wässrigen Lösung des cyanidfreien Metallsalzes vorhanden.

Bevorzugt wird der im Kreislauf durch den Strahldispergator zirkulierenden Dispersion anschließend noch eine komplexbildende Komponente über Behälter B1 oder B2 zudosiert. Die komplexbildende Kom-ponente wird dabei bevorzugt in einer Mischung aus Wasser, dem organischen Komplexliganden und dem Peroxid eingesetzt.

Die Dosierung der komplexbildenden Komponente in den Kreislauf und ein anschließendes Rezirkulieren findet bevorzugt unter Druck¬verlus-ten in der Düse zwischen 0,001 bar und 10 bar statt.

Erfindungsgemäß kann die DMC-Katalysatordispersion auch in einem konti¬nuier-lichen Verfahren, wie es beispielhaft in Fig. 5 gezeigt ist, hergestellt werden. Die wässrigen Lösungen des cyanidfreien Metallsalzes und des Metallcyanidsalzes werden nach Methode 1, 2 oder 3 im Mischorgan M1 umgesetzt, wobei sich eine Dispersion bildet. Der organische Komplexligand wie auch das Peroxid können dabei in der wäßrigen Lösung des cyanidfreien Metallsalzes und/ oder des Metallcyanidsalzes vorhanden sein. In diesem Fall entfällt in Fig. 5 die Mischstufe M2. Möglich ist auch die Zugabe des organischen Komplexliganden und des Peroxids nach der Ausfällung der Doppelmetallcyanid-Verbindung über das Mischorgan M2. Zur Erhöhung der Verweilzeit der Dispersion kann diese über das Mischorgan M2 im Kreislauf gefahren werden. Im Anschluss kann im Mischorgan M3 die komplexbildende Komponente - bevorzugt in einer Mischung aus Wasser, organischem Komplexliganden und Peroxid - zugegeben und zur Er-höhung der Verweilzeit rezirkuliert werden.

In einer bevorzugten Ausführungsform des erfindungsgemäßen Verfahrens ist die Temperatur in Schritt i) zwischen 26 °C und 49 °C, bevorzugt zwischen 28 °C und 47 °C, besonders bevorzugt zwischen 29 °C und 42 °C und ganz besonders bevorzugt zwischen 30 °C und 40 °C. Hierbei entspricht die Prozesstemperatur der Prozesstemperatur im Behälter B2 in Fig. 4. Eine Prozesstemperatur von 26 °C bis 49 °C führt zu einer weiteren Verbesserung der Aktivität des DMC-Katalysators.

Im erfindungsgemäßen Verfahren wird in einem zweiten Schritt (ii) der Feststoff aus der aus (i) erhaltenen Dispersion abgetrennt.

Hierbei erfolgt die Isolierung des Feststoffs (d.h. die Vorstufe des erfindungsgemäßen Katalysators) aus der Dispersion durch bekannte Techniken, wie Zentrifugation oder Filtration.

Geeignete Filtervorrichtungen sind beispielsweise beschrieben in "Ullmann's Encyclopedia of Industrial Chemistry", Vol. B 2, Kapitel 9. und 10., VCH, Weinheim, 1988 und H. Gasper, D. Oechsle, E. Pongratz (Hrsg.): "Handbuch der industriellen Fest/Flüssig-Filtration",Wiley-VCH Verlag GmbH, Weinheim, 2000.

Das zur Filtration notwendige Druckgefälle kann dabei durch Schwerkraft, durch Zentrifugalkraft (z.B. Filterzentrifugen), bevorzugt durch Gasdifferenzdruck (z.B. Vakuumfilter oder Druckfilter) oder durch Flüssigkeitsdruck (z.B. Filterpressen, Trommel- oder Scheibenfilter sowie eventuell Querstromfiltrationsmodule) aufgebracht werden.

Für die Abtrennung der Katalysatoren können sowohl diskontinuierlich als auch kontinuierlich betriebene Filtervorrichtungen eingesetzt werden. Beispiele für diskontinuierlich arbeitende Filtervorrichtungen sind Schäl- und Stülpfilterzentrifugen, Membran-, Kammer-, Rahmen- oder Röhrenfilterpressen, Pressfilterautomaten, Auto-press-Vorrichtungen, Tellerdruck-, Kerzen- und Plattenfilter sowie Vakuum- und Drucknutschen. Beispiele für kontinuierlich arbeitende Filtervorrichtungen sind Sieb-bandpressen, Druck- und Vakuumtrommelfilter, Druck- und Vakuumscheibenfilter, Bandfilter und Querstromfilter.

Besonders geeignet zur Filtration der DMC-Katalysatordispersion im Labormaßstab sind Vakuum- oder Druckfilter oder -nutschen, im Technikums- und Betriebsmaßstab Drucknutschen, Filterpressen und Pressfilterautomaten.

Als besonders geeignet haben sich im Pilot- und Technikumsmaßstab Membran-filter-pressen erwiesen. Diese ermöglichen unter Zuhilfenahme eines geeigneten Filter-tuches, bevorzugt eines Membrantuches, die Filtration der DMC-Katalysator-dispersion aufgrund eines aufgebrachten Flüssigkeitsdruckgefälles.

Die Filtration wird i.a. bei Temperaturen von 10 bis 80°C durchgeführt. Die angelegten Druckdifferenzen können 0,001 bar bis 200 bar, bevorzugt 0,1 bar bis 100 bar, besonders bevorzugt 0,1 bar bis 25 bar betragen, wobei die angelegte Druckdifferenz von der eingesetzten Vorrichtung abhängig ist.

Im erfindungsgemäßen Verfahren wird der in Schritt (ii) erhaltene isolierte Feststoff mittels Redispergieren oder Filterkuchenwäsche gewaschen.

In einer bevorzugten Ausführungsform des erfindungsgemäßen Verfahrens wird in einem dritten Schritt (iii) der isolierte Feststoff mit einer wässrigen Lösung eines organischen Komplexliganden mittels einer Filterkuchenwäsche gewaschen.

Hierbei erfolgt die Filterkuchenwäsche bevorzugt durch Anmaischen oder bevorzugt durch eine Durchströmungswäsche. Dabei wird der Kuchen mit der Waschflüssigkeit durchströmt, und die vorher im Kuchen enthaltene Flüssigkeit wird verdrängt, wobei auch Diffusionseffekte wirksam werden. Die Entfeuchtung des gewaschenen Kuchens kann durch Gasdifferenzdruck, Fliehkraft oder mechanisches Pressen erfolgen oder bevorzugt kombiniert durch eine Gasdifferenzdruckentfeuchtung mit nachfolgendem mechanischen Auspressen. Der Druck zum mechanischen Auspressen kann dabei sowohl mechanisch als auch durch Membranen aufgebracht werden.

Mit Hilfe der Filterkuchenwäsche wird der Herstellungsprozess vereinfacht und damit auch beschleunigt. Das bevorzugte Verhältnis von Waschflüssigkeit zu Filterkuchenvolumen liegt bei den Mengen, die einen vollständigen Austausch der im ursprünglichen Filterkuchen vorhandenen Flüssigkeitsmenge bewirken.

In einer alternativ bevorzugten Ausführungsvariante des erfindungsgemäßen Verfahrens wird der isolierte Feststoff anschließend in einem dritten Verfahrensschritt mit einer wässrigen Lösung des organischen Komplexliganden gewaschen (z.B. durch Redispergieren und anschließende erneute Isolierung durch Filtration oder Zentrifugation). Auf diese Weise können zum Beispiel wasserlösliche Nebenprodukte, wie Kaliumchlorid, aus dem erfindungsgemäßen Katalysator entfernt werden. Bevorzugt liegt die Menge des organischen Komplexliganden in der wässrigen Waschlösung zwischen 40 und 80 Gew.-%, bezogen auf die Gesamtlösung.

Optional wird im dritten Schritt der wässrigen Waschlösung komplexbildende Komponente, bevorzugt im Bereich zwischen 0,5 und 5 Gew.-%, bezogen auf die Gesamtlösung, zugefügt.

Optional wird im dritten Schritt der wässrigen Waschlösung Peroxid, bevorzugt im Bereich zwischen 1 und 20 Gew.-%, bezogen auf die Gesamtlösung, zugefügt.

Außerdem ist es vorteilhaft, den isolierten Feststoff mehr als einmal zu waschen. Vorzugsweise wird in einem ersten Waschschritt (iii-1) mit einer wässrigen Lösung des organischen Komplexliganden (z.B. durch Redispergieren und anschließende erneute Isolierung durch Filtration oder Zentrifugation), um auf diese Weise zum Beispiel wasserlösliche Nebenprodukte, wie Kaliumchlorid, aus dem erfindungsgemäßen Katalysator zu entfernen. Besonders bevorzugt liegt die Menge des organischen Komplexliganden in der wässrigen Waschlösung zwischen 40 und 80 Gew.-%, bezogen auf die Gesamtlösung des ersten Waschschritts. In den weiteren Waschschritten (iii-2) wird entweder der erste Waschschritt einmal oder mehrmals, vorzugsweise einmal bis dreimal wiederholt, oder vorzugsweise wird eine nicht wässrige Lösung, wie z.B. eine Mischung oder Lösung aus organischem Komplexliganden und komplexbildender Komponente (bevorzugt im Bereich zwischen 0,5 und 5 Gew.-%, bezogen auf die Gesamtmenge der Waschlösung des Schrittes (iii-2)) und/oder Peroxid (bevorzugt im Bereich zwischen 1 und 20 Gew.-%, bezogen auf die Gesamtmenge der Waschlösung des Schrittes (iii-2)), als Waschlösung eingesetzt und der Feststoff damit einmal oder mehrmals, vorzugsweise einmal bis dreimal gewaschen.

Im erfindungsgemäßen Verfahren wird in einem vierten Schritt (iv) der erhaltene Feststoff anschließend getrocknet.

Hierbei wird der isolierte und gegebenenfalls gewaschene Feststoff anschließend, gegebenenfalls nach Pulverisierung, bei Temperaturen von im allgemeinen 20 - 100°C und bei Drücken von im allgemeinen 0,1 mbar bis Normaldruck (1013 mbar) getrocknet.

In einer bevorzugten Ausführungsform des erfindungsgemäßen Verfahrens erfolgen die Schritte (ii) und (iii) in einer Filterpresse.

Es hat sich als vorteilhaft erwiesen, den gewaschenen Filterkuchen nach der Filterkuchenwäsche bei Drücken von 0,5 bis 200 bar, bevorzugt bei möglichst hohen Drücken, auszupressen. Dies kann z.B. direkt im Anschluss an die Filterkuchenwäsche in einer Filterpresse erfolgen oder mittels anderer geeigneter Pressvorrichtungen, die ein Aufbringen eines mechanischen Druckes ermöglichen, so dass die im Filterkuchen vorhandene Flüssigkeit durch eine Membran oder ein geeignetes Filtertuch entweichen kann. Das sich an das Waschen des Filterkuchens anschließende bevorzugt vor dem Trocknen durchzuführende mechanische Entfeuchten des Filterkuchens kann bevorzugt in der Filterpresse geschehen, bevorzugt durch mechanisches Auspressen durch einen auf die Membranen aufgegebenen Druck. Das mechanische Entfeuchten führt bevorzugt zu einer möglichst weitgehenden Entfernung der Waschflüssigkeit aus dem Filterkuchen.

Der DMC-Katalysator wird anschließend bei Temperaturen von etwa 20 bis 100°C und bei Drücken von etwa 0,1 mbar bis Normaldruck (1013 mbar) getrocknet. Hierzu sind Kontakttrockner und Konvektionstrockner wie auch Sprühtrockner geeignet. Die Trocknung wird bevorzugt auch direkt in den Vorrichtungen zur mechanischen Flüssigkeitsabtrennung durchgeführt, wenn diese dafür geeignet sind (z.B. Nutschtrockner, Zentrifugentrockner, "heiße Filterpresse").

In einer besonders bevorzugten Ausführungsform des erfindungsgemäßen Verfahrens erfolgen die Schritte (ii), (iii) und (iv) in einer beheizbaren Filterpresse.

Im Verfahren bevorzugt eingesetzt wird die beheizbare Filterpresse. Diese ist aufgebaut wie eine übliche Filterpresse mit Membranpaket. Konstruktiv unterscheiden sich die zu verwendenden Membranplatten von üblichen Membranplatten dadurch, dass ein Heizmedium den Raum hinter der Membran durchströmen kann. Bevorzugt werden flüssigkeitsdichte (sogenannte "tropf-" oder "gasdichte") Membranfilterplatten eingesetzt.

Das aufgeheizte Heizmedium strömt auf der Rückseite der Pressmembranen, vom Filterkuchen durch die Pressmembran und das Filtermedium vollständig getrennt, an den Filterkuchen vorbei und erwärmt diese dabei. Das Pressmedium steht dabei unter einem ausreichend hohen Druck, um den Kontakt der Membranen mit den Filterkuchen zu gewährleisten. Die Filterkuchen können ein- oder beidseitig beheizt werden. Günstig hinsichtlich der Trocknungsdauer ist die beidseitige Beheizung.

Zur Unterstützung des Trocknungsvorgangs liegt filtratseitig Vakuum an. Dieses Vakuum kann beispielsweise durch eine Flüssigkeitsringpumpe erzeugt werden. Der abgesaugte Brüdenstrom wird vor der Vakuumpumpe gekühlt, um die flüchtigen Bestandteile (z.B. tert.-Butanol und Wasser) auszukondensieren. Mess- und Regelgrößen sind die auskondensierte Menge, der Druck im Filtratsystem der Presse und die Filterkuchentemperatur.

Im beschriebenen Verfahren betragen die Membranpressdrücke bevorzugt 0,1 bar bis 10 bar. Temperaturen des Press- und Heizmediums betragen 30°C bis 80°C bevorzugt 40°C bis 60°C. Der filtratseitige Druck ist bevorzugt kleiner als 100 mbar Die Durchflussrate des Heizmediums ist dabei so hoch zu wählen, dass ein guter Wärmeübergang zwischen Heizmedium und Produkt erfolgt. Trocknungszeiten betragen i.A. einige Minuten bis mehrere Stunden, üblicherweise eine bis zehn Stunden. Restfeuchten unterhalb des Zielwertes von ca. 5% werden mit dieser Art der Trocknung sicher erreicht.

In weiteren Verfahrensschritten kann das so isolierte und von Nebenkomponenten befreite Produkt gemahlen und verpackt werden.

Ein weiterer Gegenstand der vorliegenden Erfindung ist der nach dem erfindungsgemäßen Verfahren hergestellte DMC-Katalysator.

Ein weiterer Gegenstand der vorliegenden Erfindung ist die Verwendung der nach dem erfindungsgemäßen Verfahren hergestellten DMC-Katalysatoren in einem Verfahren zur Herstellung von Polyoxyalkylenpolyolen, bevorzugt Polyetherpolyolen durch Polyaddition von Alkylenoxiden an aktive Wasserstoffatome aufweisende Starterverbindungen und/oder Polyethercarbonatpolyolen durch Polyaddition von Alkylenoxiden an aktive Wasserstoffatome aufweisende Starterverbindungen in Gegenwart von Kohlendioxid.

Die nach dem erfindungsgemäßen Verfahren hergestellten DMC-Katalysatoren können wegen ihrer außerordentlich hohen Aktivität häufig in sehr niedrigen Konzentrationen eingesetzt werden (25 ppm und weniger, bezogen auf die Menge des herzustellenden Polyoxyalkylenpolyols, bevorzugt des Polyetherpolyols). Werden die in Gegenwart der nach dem erfindungsgemäßen Verfahren hergestellten DMC-Katalysatoren hergestellten Polyoxyalkylenpolyole, bevorzugt Polyetherpolyole, zur Herstellung von Polyurethanen verwendet, kann auf eine Entfernung des Katalysators aus dem Polyoxyalkylenpolyol, bevorzugt Polyetherpolyol, verzichtet werden, ohne dass die Produktqualitäten des erhaltenen Polyurethans nachteilig beeinflusst werden.

## Beispiele

Die Bestimmung der OH-Zahlen erfolgte gemäß der Vorschrift der DIN 53240. Die Viskositäten wurden mittels Rotationsviskosimeter (Physica MCR 51, Hersteller: Anton Paar) nach der Vorschrift der DIN 53018 ermittelt.

Die Bestimmung der hochmolekularen Nebenprodukte ("High Molecular Weight Tail" (HMWT)) erfolgte analog zu der in US 6,013,596 beschriebenen Methode.

### Verwendete Ausgangsstoffe:

tert-Amylperoxypivalat (TAPP): Trigonox 125-C70 (Fa. Nouryon Chemicals)
tert-Butylperoxy-2-ethylhexanoat (TBPEH): Luperox 26 (Fa. Arkema)

## Herstellung der DMC-Katalysatoren:

### Beispiel 1 (Vergleich):

Der Katalysator wurde mit einer Apparatur gemäß Fig. 4 hergestellt.

In einem Schlaufenreaktor, der einen Strahldispergator gemäß Fig. 2 mit einer Bohrung (Durchmesser 0,7 mm) enthält, wurde eine Lösung aus 258 g Zinkchlorid in 937 g destilliertem Wasser und 135 g tert.-Butanol bei 35°C zirkuliert (bestimmt im Behälter B2 in Fig. 4). Hierzu wurde eine Lösung aus 26 g Kaliumhexa¬cyano¬cobaltat in 332 g destilliertem Wasser zudosiert. Der Druckverlust im Strahldispergator betrug dabei 2,9 bar. Anschließend wurde die gebildete Dispersion 60 min bei 35°C und einem Druckverlust im Strahldispergator von 2,9 bar zirkuliert. Danach wurde eine Mischung aus 5,7 g tert.-Butanol, 159 g destilliertem Wasser und 27,6 g Polypropylenglykol 1000 (PPG-1000) zudosiert und die Dispersion dann 80 min bei 35°C und einem Druckverlust im Strahldispergator von 2,9 bar zirkuliert.

230 g der erhaltenen Dispersion wurden in einer Drucknutsche mit 20 cm$^3$ Filterfläche filtriert und anschließend mit einer Mischung aus 82 g tert.-Butanol, 42,3 g destilliertem Wasser und 1,7 g Polypropylenglykol 1000 gewaschen.

Der gewaschene Filterkuchen wurde mechanisch zwischen 2 Streifen Filterpapier abgepresst und abschließend für 3 h bei Raumtemperatur im Hochvakuum bei ca. 0,05 bar (absolut) getrocknet.

Beispiel 2:

Der Katalysator wurde mit einer Apparatur gemäß Fig. 4 hergestellt.

In einem Schlaufenreaktor, der einen Strahldispergator gemäß Fig. 2 mit einer Bohrung (Durchmesser 0,7 mm) enthält, wurde eine Lösung aus 258 g Zinkchlorid in 937 g destilliertem Wasser, 135 g tert.-Butanol und 13,5 g tert-Amylperoxypivalat (TAPP) bei 35°C zirkuliert (bestimmt im Behälter B2 in Fig. 4). Hierzu wurde eine Lösung aus 26 g Kaliumhexa¬cyano¬cobaltat in 332 g destilliertem Wasser zudosiert. Der Druckverlust im Strahldispergator betrug dabei 2,9 bar. Anschließend wurde die gebildete Dispersion 60 min bei 35°C und einem Druckverlust im Strahldispergator von 2,9 bar zirkuliert. Danach wurde eine Mischung aus 5,7 g tert.-Butanol, 0,6 g tert-Amylperoxypivalat (TAPP), 159 g destilliertem Wasser und 27,6 g Polypropylenglykol 1000 (PPG-1000) zudosiert und die Dispersion dann 80 min bei 35°C und einem Druckverlust im Strahldispergator von 2,9 bar zirkuliert. 230 g der erhaltenen Dispersion wurden in einer Drucknutsche mit 20 cm$^3$ Filterfläche filtriert und anschließend mit einer Mischung aus 82 g tert.-Butanol, 42,3 g destilliertem Wasser und 1,7 g Polypropylenglykol 1000 gewaschen. Der gewaschene Filterkuchen wurde mechanisch zwischen 2 Streifen Filterpapier abgepresst und abschließend für 3 h bei Raumtemperatur im Hochvakuum bei ca. 0,05 bar (absolut) getrocknet.

Beispiel 3:

Der Katalysator wurde mit einer Apparatur gemäß Fig. 4 hergestellt.

In einem Schlaufenreaktor, der einen Strahldispergator gemäß Fig. 2 mit einer Bohrung (Durchmesser 0,7 mm) enthält, wurde eine Lösung aus 258 g Zinkchlorid in 937 g destilliertem Wasser, 135 g tert.-Butanol und 13,5 g tert-Butylperoxy-2-ethylhexanoat (TBPEH) bei 35°C zirkuliert (bestimmt im Behälter B2 in Fig. 4). Hierzu wurde eine Lösung aus 26 g Kaliumhexa¬cyano¬cobaltat in 332 g destilliertem Wasser zudosiert. Der Druckverlust im Strahldispergator betrug dabei 2,9 bar. Anschließend wurde die gebildete Dispersion 60 min bei 35°C und einem Druckverlust im Strahldispergator von 2,9 bar zirkuliert. Danach wurde eine Mischung aus 5,7 g tert.-Butanol, 0,6 g tert-Butylperoxy-2-ethylhexanoat (TBPEH), 159 g destilliertem Wasser und 27,6 g Polypropylenglykol 1000 (PPG-1000) zudosiert und die Dispersion dann 80 min bei 35°C und einem Druckverlust im Strahldispergator von 2,9 bar zirkuliert.

230 g der erhaltenen Dispersion wurden in einer Drucknutsche mit 20 cm$^3$ Filterfläche filtriert und anschließend mit einer Mischung aus 82 g tert.-Butanol, 42,3 g destilliertem Wasser und 1,7 g Polypropylenglykol 1000 gewaschen. Der gewaschene Filterkuchen wurde mechanisch zwischen 2 Streifen Filterpapier abgepresst und abschließend für 3 h bei Raumtemperatur im Hochvakuum bei ca. 0,05 bar (absolut) getrocknet.

**Katalysator-Testung ("8K Diol Stressed Test"):**

Die Testung der DMC-Katalysatoren erfolgte im sogenannten "8K Diol Stressed Test". Hierbei wurde ausgehend von einem bifunktionellen Polypropylenglykol-Starter mit OH-Zahl = 147 mg KOH/g ("Arcol Polyol 725" der Firma Covestro) bei kurzer Propylenoxid-Dosierzeit (30 Minuten) ein Polypropylenglykol mit berechneter OH-Zahl = 14 mg KOH/g, d.h. Molekulargewicht = 8.000 g/mol ("8K Diol") hergestellt. Das entscheidende Beurteilungskriterium für die Katalysatorqualität/-aktivität in diesem Test ist die Viskosität des erhaltenen Polyols, wobei ein DMC-Katalysator erhöhter Qualität/Aktivität zu einer niedrigeren 8K Diol Viskosität führt.

Allgemeine Durchführung:

In einem 1 Liter Edelstahlreaktor wurden 75 g eines bifunktionellen Polypropylenglykol-Starters (OH-Zahl = 147 mg KOH/g) und 30,7 mg DMC-Katalysator vorgelegt. Nach 5-maligem Stickstoff/Vakuum-Austausch zwischen 0,1 und 3,0 bar (absolut) wurde der Reaktorinhalt unter Rühren (800 U/min) auf 130°C aufgeheizt. Das Gemisch wurde dann 30 min bei 130°C und 100 mbar (absolut) mit Stickstoff gestrippt. Anschließend wurden bei 130°C und 100 mbar (absolut) 7,5 g Propylenoxid zur Aktivierung des Katalysators zugegeben. Die Katalysatoraktivierung äußerte sich in einem beschleunigten Druckabfall im Reaktor. Nach erfolgter Katalysatoraktivierung wurde das restliche Propylenoxid (685,7 g) innerhalb von 30 min bei 130°C unter Rühren (800 U/min) zudosiert. Nach einer Nachreaktionszeit von 30 min bei 130°C wurden flüchtige Bestandteile im Vakuum (< 10 mbar) bei 90°C für 30 min abdestilliert. Das Produkt wurde dann auf Raumtemperatur abgekühlt und dem Reaktor entnommen.

Vom erhaltenen Produkt wurden OH-Zahl und Viskosität (25°C) gemessen. Im Falle eines Abweichens der gemessenen von der berechneten OH-Zahl (14 mg KOH/g) wurde aus der gemessenen Viskosität mit der folgenden Formel eine "korrigierte Viskosität" ermittelt:

$$\text{korrigierte Viskosität } (25°C) = \text{gemessene Viskosität } (25°C) + 659 * (OHZ - 14)$$

Die Ergebnisse der Katalysator-Testungen im "8K Diol Stressed Test" sind in Tabelle 1 zusammengefasst.

Tabelle 1:

| Katalysator-Testung / Beispiel | DMC-Katalysator / Beispiel | Peroxid | OH-Zahl [mg KOH/g] | Viskosität 25°C / gemessen [mPas] | Viskosität 25°C / korrigiert [mPas] |
|---|---|---|---|---|---|
| 4 (Vgl.) | 1 (Vgl.) | -- | 13,9 | 4975 | 4909 |
| 5 | 2 | TAPP | 14,3 | 4410 | 4608 |
| 6 | 3 | TBPEH | 14,3 | 4455 | 4653 |

Die Ergebnisse zeigen, dass DMC-Katalysatoren, die in Gegenwart von Peroxiden hergestellt wurden, im "8K Diol Stressed Test" zu niedrigeren Viskositätswerten führen.

Bestimmung auf "High Molecular Weight Tail":

In den Polyolen aus Beispiel 4 (Vergleich) sowie Beispiel 6 wurden zusätzlich die hochmolekularen Nebenprodukte ("High Molecular Weight Tail") bestimmt (Tabelle 2):

Tabelle 2:

| High Molecular Weight Tail / Molmassen-Bereich [g/mol] | Polyol aus Beispiel 4 (Vergleich) | Polyol aus Beispiel 6 |
|---|---|---|
| 40.000 - 50.357 | 16547 | 15696 |
| 50.358 - 63.396 | 13927 | 13559 |
| 63.397 - 79.810 | 11996 | 11468 |
| 79.811 - 100.475 | 9583 | 8135 |
| 100.476 - 126.491 | 4987 | 3142 |
| 126.492 - 159.243 | 1813 | 981 |
| 159.244 - 200.475 | 604 | 265 |
| 200.476 - 252.383 | 207 | 84 |
| 252.384 - 317.731 | 76 | 28 |
| 317.732 - 400.000 | 30 | 10 |

Die Ergebnisse zeigen, dass im Polyol aus Beispiel 6, das durch einen erfindungsgemäßen DMC-Katalysator erhalten wurde, der in Gegenwart eines Peroxids hergestellt wurde, ein deutlich reduzierter "High Molecular Weight Tail" vorhanden ist, insbesondere im Molmassenbereich zwischen 100.000 und 400.000 g/mol.

**Patentansprüche**

1. Verfahren zur Herstellung eines Doppelmetallcyanid-Katalysators (DMC) umfassend

   i) Umsetzung einer wässrigen Lösung eines cyanidfreien Metallsalzes, einer wässrigen Lösung eines Metallcyanidsalzes, eines organischen Komplexliganden, optional einer komplexbildenden Komponente unter Bildung einer Dispersion,
   (ii) die Abtrennung des Feststoffs aus der aus (i) erhaltenen Dispersion,
   (iii) die Waschung des isolierten Feststoffs mittels Redispergieren oder Filterkuchenwäsche,
   (iv) die Trocknung des erhaltenen Feststoffs,
   wobei die Umsetzung in Schritt i) unter Einsatz einer Mischdüse erfolgt,

wobei der organische Komplexligand eine oder mehrere Verbindung(en) ist und ausgewählt wird aus der Gruppe bestehend aus Dimethoxyethan, tert.-Butanol, 2-Methyl-3-buten-2-ol, 2-Methyl-3-butin-2-ol, Ethylenglykol-mono-tert.-butylether und 3-Methyl-3-oxetan-methanol, bevorzugt tert.-Butanol,
wobei Doppelmetallcyanid-Verbindungen der Formel (I) in dem DMC-Katalysator enthalten sind

$$M_x[M'_{x'}(CN)_y]_z \qquad (I),$$

wobei

M ausgewählt ist aus einem oder mehreren Metallkationen der Gruppe bestehend aus Zn(II), Fe(II), Ni(II), Mn(II), Co(II), Sr(II), Sn(II), Pb(II) und Cu(II), bevorzugt Zn(II), Fe(II), Co(II) und Ni(II), und
M' ausgewählt ist aus einem oder mehreren Metallkationen der Gruppe bestehend aus Fe(II), Fe(III), Co(II), Co(III), Cr(II), Cr(III), Mn(II), Mn(III), Ir(III), Ni(II), Rh(III), Ru(II), V(IV) und V(V) bevorzugt Co(III), Fe(III), Cr(III) und Ir(III),
, und
$x$, $x'$, $y$ und $z$ sind ganzzahlig und so gewählt, dass die Elektronenneutralität der Doppelmetallcyanidverbindung gegeben ist bevorzugt $x = 3$, $x' = 1$, $y = 6$ und $z = 2$,
**dadurch gekennzeichnet, dass** die Umsetzung in Schritt i) in Gegenwart eines Peroxids erfolgt.

2. Verfahren gemäß Anspruch 1, wobei das Peroxid in einem Gewichtsverhältnis von 2 zu 98 bis 30 zu 70, bevorzugt von 5 zu 95 bis 20 zu 80 bezogen auf den organischen Komplexliganden eingesetzt wird.

3. Verfahren gemäß Anspruch 1 oder 2, wobei das Peroxid ein organisches Peroxid ist.

4. Verfahren gemäß Anspruch 3, wobei das organische Peroxid eine oder mehrere Verbindungen ist und ausgewählt wird aus der Gruppe bestehend aus Dibenzoylperoxid, Dilauroylperoxid, Acetylacetonperoxid, Cyclohexanonperoxid, Methylethylketonperoxid, Methylisobutylketonperoxid, Cumolhydroperoxid, tert-Butylhydroperoxid, Diisopropylbenzolhydroperoxid, Di-(2-tert-butyl-peroxyisopropyl)-benzol, tert-Butylcumylperoxid, Di-tert-amylperoxid, Di-tert-butylperoxid, Dicumylperoxid, 2,5-Dimethyl-2,5-di-(tert-butylperoxy)-hexan, 1,1-Di-(tert-butylperoxy)-3,3,5-trimethylcyclohexan, 1,1-Di-(tert-butylperoxy)-cyclohexan, 1,1-Di-(tert-amylperoxy)cyclohexan 2,5-Dimethyl-2,5-di(2-ethylhexanoylperoxy)-hexan, 2,2-Di-(tert-butylperoxy)butan, tert-Butyl-peroxy-benzoat, tert-Butylperoxy-3,5,5-trimethylhexanoat, tert-Butylperoxy-2-ethylhexanoat, tert-Butylmonoperoxymaleat, Di-(4-tert-butyl-cyclohexyl)-peroxydicarbonat, tert-Butylperoxy-2-ethylhexylcarbonat, tert-Butylperoxyisopropylcarbonat, 1,3 1,4-Bis(tert-butylperoxyisopropyl)benzol, tert-Butyl Cumyl Peroxid, 2,5-Di(tert-butylperoxy)-2,5-dimethylhexan, n-Butyl-4,4'-di(tert-butylperoxy)valerat, Di-(2,4-dichlorobenzoyl)-peroxid, tert-Butylperoxybenzoat, Butyl-4,4-di-(tert-butylperoxy) valerat, 2,5-Dimethyl-2,5-di(tert-butylperoxy)hexin-3, Di-tert-Butylperoxid, tert-Butyl-peroxyacetat, tert-Butylperoxybenzoat, tert-Butyl-peroxyneodecanoat, tert-Butylperoxy-isobutyrat, tert-Amylperoxypivalat, tert-Butylperoxypivalat, Diisopropyl-peroxydicarbonat, Dicyclohexyl-peroxydicarbonat und Dicumylperoxid.

5. Verfahren gemäß Anspruch 4, wobei das organische Peroxid eine oder mehrere Verbindungen ist und ausgewählt wird aus der Gruppe bestehend aus tert-Amylperoxypivalat, tert-Butylperoxy-2-ethylhexanoat, tert-Butylperoxypivalat und Dibenzoylperoxid.

6. Verfahren gemäß Anspruch 1 oder 2, wobei das Peroxid ein anorganisches Peroxid ist.

7. Verfahren gemäß Anspruch 6, wobei das anorganische Peroxid eine oder mehrere Verbindungen ist und ausgewählt wird aus der Gruppe bestehend aus Wasserstoffperoxid, Peroxoborate, Peroxocarbonate, Peroxochlorate, Peroxodiphosphate, Peroxodiphosphorsäure, Peroxodischwefelsäure, Peroxodisulfate, Peroxodisulfuryldifluorid, Peroxohyponitrite, Peroxokohlensäure, Peroxonitrate, Peroxomolydate, Peroxomonophosphate, Peroxomonophosphorsäure, Peroxosalpetersäure, Peroxomonoschwefelsäure, Peroxomomosulfate, Peroxowolframate.

8. Verfahren gemäß einem der Ansprüche 1 bis 7, wobei eine komplexbildende Komponente verwendet wird.

9. Verfahren gemäß Anspruch 8, wobei die komplexbildende Komponente ein Polyether, bevorzugt ein Polyetherpolyol ist.

10. Verfahren gemäß einem der Ansprüche 1 bis 9, wobei die Doppelmetallcyanid-Verbindung eine oder mehrere Verbindung(en) ist und ausgewählt wird aus der Gruppe bestehend aus Zinkhexacyano¬cobaltat(III), Zink¬hexacyanoiridat(III), Zinkhexacyanoferrat(III) und Cobalt(II)hexa¬cyanocobaltat(III) be¬vorzugt Zinkhexacyanocobaltat(III).

**11.** Verfahren gemäß einem der Ansprüche 1 bis 10, wobei im dritten Schritt (iii) der isolierte Feststoff mit einer wässrigen Lösung des organischen Komplexliganden mittels der Filterkuchenwäsche gewaschen wird.

**12.** Verfahren gemäß einem der Ansprüche 1 bis 11, wobei die Mischdüse ein Strahldispergator ist.

**13.** Verfahren gemäß einem der Ansprüche 1 bis 12, wobei die Prozesstemperatur der Dispersion bei der Umsetzung in Schritt i) zwischen 26°C und 49°C, bevorzugt zwischen 28 °C und 47 °C, besonders bevorzugt zwischen 29 °C und 42 °C und ganz besonders bevorzugt zwischen 30 °C und 40 °C ist.

**14.** Doppelmetallcyanid-Katalysator (DMC) erhältlich nach einem der Ansprüche 1 bis 13.

**15.** Verwendung eines Doppelmetallcyanid-Katalysators (DMC) gemäß Anspruch 14 zur Herstellung von Polyoxyalkylenpolyolen, bevorzugt Polyetherpolyolen und/oder Polyethercarbonatpolyolen.

**Claims**

**1.** Process for preparing a double metal cyanide catalyst (DMC) comprising

i) reaction of an aqueous solution of a cyanide-free metal salt, an aqueous solution of a metal cyanide salt, an organic complex ligand, optionally a complex-forming component, to form a dispersion;
(ii) separation of the solid off from the dispersion obtained from (i);
(iii) washing of the isolated solid by means of redispersion or filtercake washing,
(iv) drying of the solid obtained,
wherein the reaction in step i) is effected using a mixing nozzle,
wherein the organic complex ligand is one or more compound(s) and is selected from the group consisting of dimethoxyethane, tert-butanol, 2-methyl-3-buten-2-ol, 2-methyl-3-butyn-2-ol, ethylene glycol mono-tert-butyl ether and 3-methyl-3-oxetanemethanol, preferably tert-butanol,
wherein double metal cyanide compounds of the formula (I) are present in the DMC catalyst

$$M_x[M'_{x'}(CN)_y]_z \qquad (I),$$

where

M is selected from one or more metal cations from the group consisting of Zn(II), Fe(II), Ni(II), Mn(II), Co(II), Sr(II), Sn(II), Pb(II) and Cu(II), preferably Zn(II), Fe(II), Co (II) and Ni(II),
and
M' is selected from one or more metal cations from the group consisting of Fe(II), Fe(III), Co(II), Co(III), Cr(II), Cr(III), Mn(II), Mn(III), Ir(III), Ni(II), Rh(III), Ru(II), V(IV) and V(V), preferably Co(III), Fe(III), Cr(III) and Ir(III),
and
x, x', y and z are integers and are selected such as to ensure the electronic neutrality of the double metal cyanide compound, preferably x = 3, x' = 1, y = 6 and z = 2,
**characterized in that** the reaction in step i) is effected in the presence of a peroxide.

**2.** Process according to Claim 1, wherein the peroxide is used in a weight ratio of from 2:98 to 30:70, preferably from 5:95 to 20:80, based on the organic complex ligand.

**3.** Process according to Claim 1 or 2, wherein the peroxide is an organic peroxide.

**4.** Process according to Claim 3, wherein the organic peroxide is one or more compounds and is selected from the group consisting of dibenzoyl peroxide, dilauroyl peroxide, acetylacetone peroxide, cyclohexanone peroxide, methyl ethyl ketone peroxide, methyl isobutyl ketone peroxide, cumene hydroperoxide, tert-butyl hydroperoxide, diisopropylbenzene hydroperoxide, di(2-tert-butylperoxyisopropyl)benzene, tert-butyl cumyl peroxide, di-tert-amyl peroxide, di-tert-butyl peroxide, dicumyl peroxide, 2,5-dimethyl-2,5-di(tert-butylperoxy) hexane, 1,1-di(tert-butylperoxy)-3,3,5-trimethylcyclohexane, 1,1-di(tert-butylperoxy) cyclohexane, 1,1-di(tert-amylperoxy)cyclohexane, 2,5-dimethyl-2,5-di(2-ethylhexanoylperoxy)hexane, 2,2-di(tert-butylperoxy) butane, tert-butyl peroxybenzoate, tert-butyl peroxy-3,5,5-trimethylhexanoate, tert-butyl peroxy-2-ethylhexanoate, tert-butyl monoperoxymaleate, di(4-tert-butylcyclohexyl) peroxydicarbonate, tert-butyl peroxy-2-ethylhexylcarbonate, tert-butyl peroxyisopropylcarbonate, 1,3 1,4-bis(tert-butylperoxyisopropyl)benzene, tert-butyl cumyl peroxide, 2,5-di(tert-butylperoxy)-2,5-dimethylhexane, n-butyl 4,4'-di(tert-butylperoxy)valerate, di(2,4-dichlorobenzoyl) peroxide, tert-butyl peroxybenzoate, butyl 4,4-di(tert-butylperoxy)valerate, 2,5-dimethyl-2,5-di(tert-butylperoxy)hex-3-yne, di-tert-butyl peroxide, tert-butyl peroxyacetate, tert-butyl peroxybenzoate, tert-butyl peroxyneodecanoate, tert-butyl peroxyisobutyrate, tert-amyl peroxypivalate, tert-butyl peroxypivalate, diisopropyl peroxydicarbonate, dicyclohexyl peroxydicarbonate and dicumyl peroxide.

5. Process according to Claim 4, wherein the organic peroxide is one or more compounds and is selected from the group consisting of tert-amyl peroxypivalate, tert-butyl peroxy-2-ethylhexanoate, tert-butyl peroxypivalate and dibenzoyl peroxide.

6. Process according to Claim 1 or 2, wherein the peroxide is an inorganic peroxide.

7. Process according to Claim 6, wherein the inorganic peroxide is one or more compounds and is selected from the group consisting of hydrogen peroxide, peroxoborates, peroxocarbonates, peroxochlorates, peroxodiphosphates, peroxodiphosphoric acid, peroxodisulfuric acid, peroxodisulfates, peroxodisulfuryl difluoride, peroxohyponitrites, peroxocarbonic acid, peroxonitrates, peroxomolybdates, peroxomonophosphates, peroxomonophosphoric acid, peroxonitric acid, peroxomonosulfuric acid, peroxomonosulfates, peroxotungstates.

8. Process according to any of Claims 1 to 7, wherein a complex-forming component is used.

9. Process according to Claim 8, wherein the complex-forming component is a polyether, preferably a polyether polyol.

10. Process according to any of Claims 1 to 9, wherein the double metal cyanide compound is one or more compound(s) and is selected from the group consisting of zinc hexacyanocobaltate(III), zinc hexacyanoiridate(III), zinc hexacyanoferrate(III) and cobalt(II) hexacyanocobaltate(III), preferably zinc hexacyanocobaltate(III).

11. Process according to any of Claims 1 to 10, wherein, in the third step (iii), the isolated solid is washed by means of filtercake washing with an aqueous solution of the organic complex ligand.

12. Process according to any of Claims 1 to 11, wherein the mixing nozzle is a jet disperser.

13. Process according to any of Claims 1 to 12, wherein the process temperature of the dispersion during the reaction in step i) is between 26°C and 49°C, preferably between 28°C and 47°C, particularly preferably between 29°C and 42°C and very particularly preferably between 30°C and 40°C.

14. Double metal cyanide catalyst (DMC) obtainable in accordance with any of Claims 1 to 13.

15. Use of a double metal cyanide catalyst (DMC) according to Claim 14 for the preparation of polyoxyalkylene polyols, preferably polyether polyols and/or polyethercarbonate polyols.

**Revendications**

1. Procédé pour la production d'un catalyseur à base de cyanure bimétallique (DMC) comprenant

(i) mise en réaction d'une solution aqueuse d'un sel métallique exempt de cyanure, d'une solution aqueuse d'un sel de type cyanure métallique, d'un ligand complexe organique, en option d'un composant complexant, avec formation d'une dispersion,
(ii) la séparation du solide d'avec la dispersion obtenue à partir de (i),
(iii) le lavage du solide isolé, par redispersion ou lavage sur gâteau de filtration,
(iv) le séchage du solide obtenu,
la réaction dans l'étape (i) s'effectuant avec utilisation d'une buse de mélange,
le ligand complexe organique consistant en un ou plusieurs composé(s) et étant choisi dans le groupe constitué par le diméthoxyéthane, le tert.-butanol, le 2-méthyl-3-butén-2-ol, le 2-méthyl-3-butyn-2-ol, l'éther mono-tert.-butylique d'éthylèneglycol et le 3-méthyl-3-oxétane-méthanol, de préférence le tert.-butanol, des composés de type cyanure bimétallique de formule (I) étant contenus dans le catalyseur DMC

$$M_x[M'_{x'}(CN)_y]_z \qquad (1),$$

dans laquelle

M est choisi parmi un ou plusieurs cations métalliques du groupe constitué par Zn(II), Fe(II), Ni(II), Mn(II), Co(II), Sr(II), Sn(II), Pb(II) et Cu(II), de préférence Zn(II), Fe(II), Co(II) et Ni(II),
et
M' est choisi parmi un ou plusieurs cations métalliques du groupe constitué par Fe(II), Fe(III), Co(II), Co(III), Cr(II), Cr(III), Mn(II), Mn(III), Ir(III), Ni(II), Rh(III), Ru(II), V(IV) et V(V), de préférence Co(III), Fe(III), Cr(III) et Ir(III), et
x, x', y et z sont des nombres entiers et choisis de telle façon que la neutralité électronique du composé de type cyanure bimétallique est assurée, de préférence x = 3, x' = 1, y = 6 et z = 2,
**caractérisé en ce que** la réaction dans l'étape (i) s'effectue en présence d'un peroxyde.

2. Procédé selon la revendication 1, dans lequel le peroxyde est utilisé en un rapport en poids de 2 : 98 à 30 : 70, de préférence 5 : 95 à 20 : 80 par rapport au ligand complexe organique.

3. Procédé selon la revendication 1 ou 2, dans lequel le peroxyde est un peroxyde organique.

4. Procédé selon la revendication 3, dans lequel le peroxyde organique consiste en un ou plusieurs composés et est choisi dans le groupe constitué par le peroxyde de dibenzoyle, le peroxyde de dilauroyle, le peroxyde d'acétylacétone, le peroxyde de cyclohexanone, le peroxyde de méthyléthylcétone, le peroxyde de méthylisobutylcétone, l'hydroperoxide de cumène, l'hydroperoxyde de tert-butyle, l'hydroperoxyde de diisopropylbenzène, le di-(2-tert-butyl-peroxy-isopropyl)-benzène, le peroxyde de tert-butylcumyle, le peroxyde de di-tert-amyle, le peroxyde de di-tert-butyle, le peroxyde de dicumyle, le 2,5-diméthyl-2,5-di-(tert-butylperoxy)-hexane, le 1,1-di-(tert-butyl-peroxy)-3,3,5-triméthylcyclohexane, le 1,1-di-(tert-butylperoxy)-cyclohexane, le 1,1-di-(tert-amylperoxy)-cyclohexane, le 2,5-diméthyl-2,5-di(2-éthylhexanoyl-peroxy)-hexane, le 2,2-di-(tert-butylperoxy)butane, le peroxybenzoate de tert-butyle, le peroxy-3,5,5-triméthylhexanoate de tert-butyle, le peroxy-2-éthylhexanoate de tert-butyle, le monoperoxymaléate de tert-butyle, le peroxydicarbonate de di-(4-tert-butyl-cyclohexyle), le peroxy-2-éthylhexylcarbonate de tert-butyle, le peroxyisopropylcarbonate de tert-butyle, le 1,3 1,4-bis(tert-butylperoxyisopropyl)benzène, le peroxyde de tert-butylcumyle, le 2,5-di(tert-butyl-peroxy)-2,5-diméthylhexane, le 4,4'-di(tert-butyl-peroxy)valérate de n-butyle, le peroxyde de di-(2,4-dichlorobenzoyle), le peroxybenzoate de tert-butyle, le 4,4-di-(tert-butylperoxy)valérate de butyle, le 2,5-diméthyl-2,5-di(tert-butylperoxy)hexyne-3, le peroxyde de di-tert-butyle, le peroxyacétate de tert-butyle, le peroxybenzoate de tert-butyle, le peroxynéodécanoate de tert-butyle, le peroxy-isobutyrate de tert-butyle, le peroxypivalate de tert-amyle, le peroxypivalate de tert-butyle, le peroxydicarbonate de diisopropyle, le peroxydicarbonate de dicyclohexyle et le peroxyde de dicumyle.

5. Procédé selon la revendication 4, dans lequel le peroxyde organique consiste en un ou plusieurs composés et est choisi dans le groupe constitué par le peroxypivalate de tert-amyle, le peroxy-2-éthyl-hexanoate de tert-butyle, le peroxypivalate de tert-butyle et le peroxyde de dibenzoyle.

6. Procédé selon la revendication 1 ou 2, dans lequel le peroxyde est un peroxyde inorganique.

7. Procédé selon la revendication 6, dans lequel le peroxyde inorganique consiste en un ou plusieurs composés et est choisi dans le groupe constitué par le peroxyde d'hydrogène, les peroxoborates, peroxocarbonates, peroxochlorates, peroxodiphosphates, l'acide peroxodiphosphorique, l'acide peroxo-disulfurique, les peroxodisulfates, le difluorure de peroxodisulfuryle, les peroxohyponitrites, l'acide peroxocarbonique, les peroxonitrates, peroxomolybdates, peroxomonophosphates, l'acide peroxomonophosphorique, l'acide peroxonitrique, l'acide peroxomonosulfurique, les peroxomonosulfates, peroxotungstates.

8. Procédé selon l'une des revendications 1 à 7, dans lequel un composant complexant est utilisé.

9. Procédé selon la revendication 8, dans lequel le composant complexant est un polyéther, de préférence un polyétherpolyol.

**10.** Procédé selon l'une des revendications 1 à 9, dans lequel le composé de type cyanure bimétallique consiste en un ou plusieurs composé (s) et est choisi dans le groupe constitué par l'hexacyanocobaltate(III) de zinc, l'hexacyano-iridate(III) de zinc, l'hexacyano-ferrate(III) de zinc et l'hexacyanocobaltate(III) de cobalt(II), de préférence l'hexacyanocobaltate(III) de zinc.

**11.** Procédé selon l'une des revendications 1 à 10, dans lequel dans la troisième étape (iii) le solide isolé est lavé avec une solution aqueuse du ligand complexe organique au moyen du lavage sur gâteau de filtration.

**12.** Procédé selon l'une des revendications 1 à 11, dans lequel la buse de mélange est un disperseur à jet.

**13.** Procédé selon l'une des revendications 1 à 12, dans lequel la température de processus de la dispersion lors de la réaction dans l'étape (i) est comprise entre 26 °C et 49 °C, de préférence entre 28 °C et 47 °C, de façon particulièrement préférée entre 29 °C et 42 °C et de façon tout particulièrement préférée entre 30 °C et 40 °C.

**14.** Catalyseur à base de cyanure bimétallique (DMC) pouvant être obtenu selon l'une des revendications 1 à 13.

**15.** Utilisation d'un catalyseur à base de cyanure bimétallique (DMC) selon la revendication 14 pour la production de polyoxyalkylènepolyols, de préférence polyétherpolyols et/ou polyéthercarbonatepolyols.

Fig.1

Fig.2

Fig.3

Fig.4

Fig.5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3404109 A
- US 3829505 A
- US 3941849 A
- US 5158922 A
- US 5470813 A
- EP 700949 A
- EP 743093 A
- EP 761708 A
- WO 9740086 A
- WO 9816310 A
- WO 0047649 A
- WO 0139883 A1
- WO 0180994 A1
- EP 700949 A2
- WO 9816310 A1
- US 6013596 A


**In der Beschreibung aufgeführte Nicht-Patentliteratur**

- Ullmann's Encyclopedia of Industrial Chemistry. VCH, 1988, vol. B 2
- Handbuch der industriellen Fest/Flüssig-Filtration. Wiley-VCH Verlag GmbH, 2000